(19) Europäisches Patentamt
European Patent Office
Office européen des brevets

(11) Publication number: **0 103 171 B1**

(12) **EUROPEAN PATENT SPECIFICATION**

(45) Date of publication of patent specification: **29.07.87**

(51) Int. Cl.[4]: **A 01 N 25/04,** A 01 N 43/60

(21) Application number: **83107903.3**

(22) Date of filing: **10.08.83**

(54) **Suspension concentrate for weed control.**

(30) Priority: **13.08.82 JP 140790/82**

(43) Date of publication of application:
**21.03.84 Bulletin 84/12**

(45) Publication of the grant of the patent:
**29.07.87 Bulletin 87/31**

(84) Designated Contracting States:
**DE FR GB IT**

(56) References cited:
**EP-A-0 042 750**
**GB-A-2 042 539**

**The file contains technical information submitted after the application was filed and not included in this specification**

(73) Proprietor: **NISSAN CHEMICAL INDUSTRIES LTD.**
**3-7-1, Kanda Nishiki-cho**
**Chiyoda-ku Tokyo (JP)**

(72) Inventor: **Kamaki, Shiro Nissan Chemical Ind. Ltd.**
**Chuo Kenkyusho 722-1 Tsuboicho**
**Funabashi-shi Chiba-ken (JP)**
Inventor: **Matsumoto, Naoki Nissan Chemical Ind. Ltd.**
**Chuo Kenkyusho 722-1 Tsuboicho**
**Funabashi-shi Chiba-ken (JP)**
Inventor: **Kawamura, Yuji Nissan Chemical Ind. Ltd.**
**Seibutsu Kagaku Kenkyusho No.1470, Oaza-Shiraoka**
**Shiraoka-machi Minamisaitama-gun Saitama (JP)**
Inventor: **Ikai, Takashi Nissan Chemical Ind. Ltd.**
**Seibutsu Kagaku Kenkyusho No.1470, Oaza-Shiraoka**
**Shiraoka-machi Minamisaitama-gun Saitama (JP)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 103 171 B1**

## Description

The present invention relates to a suspension concentrate for weed control and a method for weed control wherein the suspension concentrate is used for foliage treatment of broad leaf crop plants whereby the phytotoxicity against the broad leaf crop plants is minimized without reducing the herbicidal effectiveness against gramineous weeds.

It is known that compounds represented by the general formula:

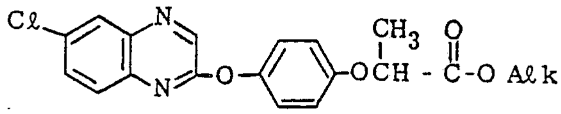

(I)

where Alk is a lower alkyl group, are extremely effective for selective control of gramineous weeds among broad leaf crop plants by foliage treatment (GB—A—2 042 539). When the compounds having such superior selectivity in their herbicidal activities are to be formulated into herbicidal compositions, there are certain points which must be taken into account. The most important point among them is to maximize the herbicidal activities of these compounds against weeds and at the same time to minimize the phytotoxicity against the broad leaf crop plants.

Heretofore, it has been most common to formulate herbicides in the form of dusts, granules, wettable powders or emulsifiable concentrates, and it has been rare to formulate them in the form of suspension concentrates. Especially in the case of herbicides for foliage treatment, emulsifiable concentrates and wettable powders are most common, and suspension concentrates are extremely rare. For the formulations of agricultural chemicals, it is desirable to have the active ingredients concentrated in the formulations for the reasons that it is thereby possible to minimize the unnecessary use of components other than the active ingredients and thus to conserve resources, that it is thereby possible to reduce the transportation costs involved in the transportation or shipping of the herbicides and that when the herbicides are applied to agricultural fields, a highly concentrated application can be done with a small amount of the highly concentrated herbicides, thus leading to an advantage of a labour-saving operation.

However, according to the conventional concept, when a solid active ingredient which is hardly soluble in an organic solvent, is to be formulated as a herbicidal composition for foliage treatment, the concentration of the active ingredient is limited to the level of its solubility in the organic solvent to be used for the formulation, to allow the active ingredient exhibit its maximum herbicidal activity. There are some instances in which such an active ingredient is highly concentrated in the form of a wettable powder or a suspension concentrate. However, in the case of a suspension concentrate, it is unavoidable that the herbicidal effect will decrease. Further, it has been believed that, in general, it is impossible for a suspension concentrate to have the same herbicidal effectiveness as an emulsifiable concentrate. Accordingly, when a suspension concentrate is used, it is usually necessary to apply a greater amount of the active ingredient per unit area than is required when the corresponding emulsifiable concentrate is used. This means not only that extra costs are involved, but also that an environmental pollution problem is likely to be thereby created. EP—A—42 750 discloses an aqueous suspension concentrate having a particle size of less than 5 μm, but the chemical structure of the active ingredient is different from the compounds represented by the above-mentioned general formula I.

The present inventors have carried out research into formulation of the compounds represented by the above-mentioned general formula I in an attempt to maximize the herbicidal activities of these compounds against weeds and yet minimize the phytotoxicity against the crop plants, and to make it possible to have a high concentration of the active ingredients in the formulation. As a results, it has been found that when the compounds represented by the general formula I are formulated into a suspension concentrate in the form of fine solid particles having an average particle size of from 0.5 to 3 μm, the suspension concentrate is as effective as the corresponding emulsifiable concentrate for the control of gramineous weeds in the growing stage when used for foliage treatment of broad leaf crop plants such as cotton, soybeans, French beans, red beans, tomatos, potatos, sun flowers, sugar beet or alfalfa in the growing stage. Further, it has been found that with this suspension concentrate, the phytotoxicity against the crop plants which was observed in the case of the emulsifiable concentrate, can be substantially reduced.

Thus, the present invention provides a suspension concentrate for weed control which comprises at least one of the compounds represented by the general formula I:

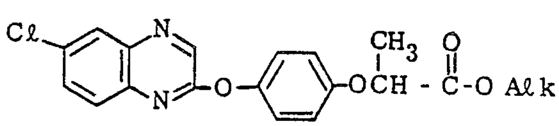

(I)

where Alk is a lower alkyl group, as the active ingredient, wherein the active ingredient is in the form of fine solid particles having an average particle size within a range of from 0.5 to 3 μm.

The present invention also provides a method for weed control, whereby the above suspension concentrate is used for foliage treatment as a herbicidal formulation having a reduced phytotoxicity against the broad leaf crop plants.

It has been found that when the compounds of the general formula I are pulverized by a usual method into fine particles having an average particle size of from 0.5 to 3 μm, the particle size distribution of the particles thereby obtained will be such that at least 90% by weight of the particles have a particle size of less than 5 μm.

Now, the present invention will be described in detail with reference to the preferred embodiment.

In the accompanying drawings, Figure 1 is a graph illustrating the relation between the average particle size of the fine particles of the active ingredient and the dosage of the active ingredient required to kill 80% of weeds.

Figure 2 is a graph illustrating the relation between the dosage of the active ingredient and the phytotoxicity as represented by the degree of phytotoxicity appearing on the leaf surface of the crop plants.

In each of Figures 1 and 2, the abscissa is represented by a logarithmic scale.

The compounds represented by the general formula I to be used as an active ingredient of the suspension concentrate of the present invention are identified in the following Table 1. (The Compound Nos. used in Table 1 will be referred to in the disclosure hereinafter).

TABLE 1

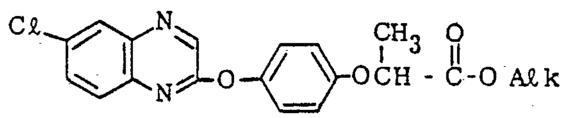

(I)

| Compound Nos. | Alk |
|---|---|
| 1 | $—CH_3$ |
| 2 | $—C_2H_5$ |
| 3 | $—C_3H_7$-n |
| 4 | $—C_3H_7$-i |
| 5 | $—C_4H_9$-n |
| 6 | $—C_4H_9$-i |
| 7 | $—C_5H_{11}$-n |

The fine particles of the active ingredient to be used in the present invention has an average particle size within a range of from 0.5 to 3 μm, whereby at least 90% by weight of the particles have a particle size of not more than 5 μm. If the average particle size or the particle size distribution of the fine particles is greater than the above-mentioned range, the herbicidal effect against weeds will be substantially reduced.

The content of the active ingredient in the suspension concentrate of the present invention is preferably within a range of from 10 to 60% by weight, more preferably from 20 to 50% by weight.

Various methods may be employed for the pulverization of the active ingredient into fine particles. A dry-mill or a wet-mill commonly used for such pulverization may be employed. Further, in order to improve the particle size uniformity, various types of classifiers may be used as a secondary means in combination with the pulverizer.

As the dry-mill, there may be mentioned a hammer-mill or a jet-air-mill. As the wet mill, there may be mentioned a homomixer, a ball-mill, an attritor, a colloid-mill, a roll-mill or a sand-mill.

In a specific embodiment for the pulverization, the solid active component represented by the general formula I is firstly pulverized by means of a dry mill such as a jet-air-mill to an average particle size of not greater than 50 μm, preferably not greater than 10 μm, and then a predetermined amount of the particles thereby obtained are thoroughly mixed with a surfactant and a dispersion medium to obtain a wet dispersion, which is then pulverized by means of a wet mill such as a sand mill to obtain desired fine particles.

The average particle size and the particle size distribution vary depending upon the pulverization conditions such as the slurry concentration at the time of wet pulverization, the type and amount of the surfactant, the type and amount of the grinding medium and the pulverization time. By properly selecting these pulverization conditions, a suspension containing the desired fine particles can be obtained.

Further, in order to stabilize the suspension of the fine particles for a long period of time, it is preferred to add a suitable amount of an aqueous solution of a thickener in addition to the above-mentioned surfactant and dispersion medium.

The proper selection of these conditions may readily be done by those skilled in the art.

As the surfactant to be used, there may be mentioned an anionic surfactant such as a lignin sulfonate, an alkylarylsulfonate, a dialkylsulfosuccinate, a polyoxyethylene alkylarylether sulfate or an alkylnaphthalene sulfonate, or a nonionic surfactant such as a polyoxyethylene alkylarylether, a polyoxyethylene styrylphenylether, a polyoxyalkylene glycol, a polyoxyethylene alkylether, a polyoxyethylene alkylester or a polyoxyethylenesorbitan alkylate. These surfactants may be used alone or in combination as a mixture of two or more. These surfactants are effective in giving wettability and dispersability to the solid herbicidal active compound for its wet pulverization and thereby to efficiently obtain finely pulverized particles. Further, they also effectively serve to stabilize the obtained suspension for a long period of time.

The amount of the surfactant to be incorporated may be optionally selected depending upon the nature of the particular surfactant to be used. However, the amount is usually from 1 to 20% by weight.

As the dispersion medium, water is most commonly used. However, one or more dispersion media selected from alcohols, glycols and hydrocarbons, may be used in suitable combinations. However, in order to avoid the growth of the particles of the active ingredient by its dissolution and precipitation in the dispersion medium, it is desirable to choose a dispersion medium in which the active ingredient is hardly soluble, preferably, the solubility of the active ingredient is less than 500 ppm at 25°C.

Various thickeners may be employed as the thickener for the present invention. Specific thickeners include natural viscous substances such as guar gum, carrageenan, gum arabic and xanthan gum; semisynthetic viscous substances such as starch derivatives, hydroxyethyl cellulose, carboxymethyl cellulose and sodium alginate; synthetic viscous substances such as polyvinyl alcohol, polyvinyl pyrrolidone and sodium polyacrylate; and inorganic substances such as bentonite. However, the thickener for the present invention is not restricted to these specific examples. The amount of the thickener is preferably within a range of from 0.02 to 20% by weight. In combination with a surfactant, these thickeners serve to prevent sedimentation or separation of the suspended particles, or to prevent the growth of the dispersed particles due to coagulation or hard-caking, thus being effective in stabilizing the suspension concentrate of the present invention for storage for a long period of time.

Further, small amount of other additives or assistants such as stabilizers, anti-freezing agents, viscosity controlling agents, antiseptics, coloring agents or anti-foaming agents may be incorporated into the suspension concentrate of the present invention, as required.

Now, the present invention will be described in further detail with reference to Examples. However, it should be understood that the present invention is by no means restricted by these specific examples.

Example 1

500 g of crystals of Compound No. 2 identified in Table 1 were pulverized by Jet-O-Mizer Mill® 0101 Model (manufactured by Seishin Kigyo). The particle sizes of the pulverized particles were measured by Coulter Counter Model TA—II (manufactured by Coulter Electronics Inc.), and found to be 4.4 µm by the first pass, 3.3 µm by the second pass and 2.8 µm by the third pass. To 70 g of these finely pulverized particles, 10 g of Nonal® 210 (i.e. a surfactant manufactured by Toho Chemical Industry Co. Ltd.) and 120 g of water were added and mixed. The mixture thereby obtained was fed, together with 200 g of glass beads having a diameter of about 1 mm, into a single cylinder-type sand grinder (manufactured by Igarashi Kikai Seizo K.K.) provided with a vessel having a capacity of 1 l, and subjected to wet pulverization at a rotational speed of the agitator of 2000 rpm. By adjusting the pulverization time of the sand grinder, samples having average particle sizes of 2.8 µm, 2.2 µm, 1.6 µm, 1.3 µm, 1.1 µm, 0.9 µm and 0.7 µm, respectively, were obtained. The particle size distribution of these samples was as shown in Table 2.

TABLE 2

| Average particle size | Particle size distribution (% by weight) | | | | | |
|---|---|---|---|---|---|---|
| | <0.5 µm | 0.5—1.0 µm | 1.0—2.0 µm | 2.0—5.0 µm | 5.0—10.0 µm | 10.0 µm< |
| 4.4 µm | 0 | trace | 5.0 | 57.0 | 35.5 | 2.5 |
| 3.3 µm | trace | 1.0 | 13.5 | 74.0 | 11.5 | trace |
| 2.8 µm | 1.0 | 5.5 | 23.5 | 33.5 | 6.5 | trace |
| 2.2 µm | 1.5 | 9.5 | 35.5 | 53.5 | trace | 0 |
| 1.6 µm | 2.0 | 16.5 | 51.5 | 30.0 | 0 | 0 |
| 1.3 µm | 4.0 | 26.0 | 56.0 | 14.0 | 0 | 0 |
| 1.1 µm | 4.5 | 38.5 | 52.0 | 5.0 | 0 | 0 |
| 0.9 µm | 8.0 | 51.0 | 37.0 | 4.0 | 0 | 0 |
| 0.7 µm | 17.0 | 63.5 | 18.5 | 1.0 | 0 | 0 |

From the above Table, it is seen that there is an interrelation between the average particle size and the particle size distribution when the fine particles are obtained by a usual pulverization method. Particularly, it is seen that in each case where the average particle size is within a range of from 0.5 to 3.0 µm, at least 90% by weight of the particles have a particle size of not greater than 5 µm.

Example 2

In the same manner as in Example 1, slurries of fine particles of Compounds Nos. 1 to 6 having various particle sizes were prepared by changing the surfactant.

To these slurries, thickeners and dispersion media were added to obtain suspension concentrates. The formulations thereby obtained are shown in Table 3. The formulation Nos. will be referred to hereinafter.

TABLE 3

| Formulation No. | Active ingredient | Average particle size (µm) | Amount of active ingredient (parts) | Additives |
|---|---|---|---|---|
| 1 | Compound No. 2 | 0.7 | 25.0 | 5.0 parts of Nonal 210 (manufactured by Toho Chemical Co. Ltd.), 20.0 parts of 1% sodium polyacrylate and 50.0 parts of water |
| 2 | " | 0.9 | 25.0 | " |
| 3 | " | 1.3 | 25.0 | " |
| 4 | " | 2.8 | 25.0 | " |
| 5 | " | 3.3 | 25.0 | " |
| 6 | " | 4.4 | 25.0 | " |
| 7 | " | 1.1 | 20.0 | 10.0 parts of Agrisol S—710 (manufactured by Kao Atlas Co. Ltd.), 10.0 parts of a 1% xanthan gum aqueous solution, 20.0 parts of ethylene glycol and 40.0 parts of water |

TABLE 3 (continued)

| Formulation No. | Active ingredient | Average particle size (μm) | Amount of active ingredient (parts) | Additives |
|---|---|---|---|---|
| 8 | 〃 | 1.6 | 20.0 | 〃 |
| 9 | 〃 | 2.8 | 20.0 | 〃 |
| 10 | 〃 | 3.3 | 20.0 | 〃 |
| 11 | 〃 | 4.4 | 20.0 | 〃 |
| 12 | Compound No. 1 | 0.7 | 45.0 | 5.0 parts of Nonal 210 (manufactured by Toho Chemical Co. Ltd.), 0.5 parts of Lunox 1000C, 20.0 parts of carboxymethyl cellulose aqueous solution and 29.5 parts of water |
| 13 | 〃 | 1.1 | 45.0 | 〃 |
| 14 | 〃 | 2.1 | 45.0 | 〃 |
| 15 | 〃 | 2.7 | 45.0 | 〃 |
| 16 | 〃 | 3.4 | 45.0 | 〃 |
| 17 | 〃 | 4.1 | 45.0 | 〃 |
| 18 | Compound No. 3 | 0.9 | 30.0 | 10.0 parts of Sorpol 3353 (manufactured by Toho Chemical Co., Ltd.), 1.0 parts of polyvinyl alcohol, 20.0 parts of isopropyl alcohol and 39.0 parts of water |
| 19 | 〃 | 1.2 | 30.0 | 〃 |
| 20 | 〃 | 2.6 | 30.0 | 〃 |
| 21 | 〃 | 3.3 | 30.0 | 〃 |
| 22 | 〃 | 4.4 | 30.0 | 〃 |

In Table 3, "parts" means "parts by weight".

Example 3

Herbicidal test by foliage treatment

Delvium soil was put in a plastic pot having a length of 22 cm, a width of 15 cm and a depth of 6 cm. Seeds of barnyardgrass, large crabgrass and green foxtail were sown, and covered with soil in a thickness of about 1.5 cm. When the weeds had grown to a 4—5 leaf stage, a herbicide was sprayed uniformly on the foliage so that a predetermined amount of the active ingredient was applied.

The herbicide was prepared by diluting each of the suspension concentrates of the above-mentioned formulations with water and adding a spreader thereto. The herbicides thus prepared was sprayed over the entire surface of the foliage of the various weeds by means of a small size spray. After two weeks from the application of the herbicides, the fresh weight of the surviving weeds on the soil was measured, and the ratio of the fresh weight of the surviving weeds to the weight of the surviving weeds in the non-treated area was represented by percentage. The herbicidal effect was evaluated in accordance with the following evaluation standards. The results are shown in Table 4.

Evaluation Standards

| | | |
|---|---|---|
| 10 | Withering ratio | 100% |
| 9 | " | >90 |
| 8 | " | 80—90 |
| 7 | " | 70—80 |
| 6 | " | 60—70 |
| 5 | " | 50—60 |
| 4 | " | 40—50 |
| 3 | " | 30—40 |
| 2 | " | 20—30 |
| 1 | " | 10—20 |
| 0 | " | 0—10 |

For the purpose of comparison, an emulsifiable concentrate was prepared to have the following composition, and it was subjected to a herbicidal test in the same manner as in Example 3. This is presented as Reference Example in Table 4.

Reference Example 1
Emulsifiable concentrate

| | |
|---|---|
| Compound No. 2 | 15 parts by weight |
| Xylene | 20 parts by weight |
| Sorpol® 2680 (a surfactant manufactured by Toho Chemical Co., Ltd.) | 10 parts by weight |
| Dimethylformamide | 30 parts by weight |
| Methylnaphthalene | 25 parts by weight |

TABLE 4

| | | Average particle size (μm) | Amount of active ingredient (kg./ha.ai) | Barnyard grass | Large crab grass | Green foxtail |
|---|---|---|---|---|---|---|
| Formulations of the Present Invention | Formulation 1 | 0.7 | 0.125<br>0.063<br>0.031 | 10<br>10<br>9 | 10<br>10<br>9 | 10<br>10<br>9 |
| | Formulation 2 | 0.9 | 0.125<br>0.063<br>0.031 | 10<br>10<br>9 | 10<br>10<br>9 | 10<br>10<br>9 |
| | Formulation 3 | 1.3 | 0.125<br>0.063<br>0.031 | 10<br>10<br>9 | 10<br>10<br>9 | 10<br>10<br>9 |
| | Formulation 4 | 2.8 | 0.125<br>0.063<br>0.031 | 10<br>10<br>9 | 10<br>10<br>9 | 10<br>10<br>9 |
| | Formulation 7 | 1.1 | 0.125<br>0.063<br>0.031 | 10<br>10<br>9 | 10<br>10<br>9 | 10<br>10<br>9 |
| | Formulation 8 | 1.6 | 0.125<br>0.063<br>0.031 | 10<br>10<br>9 | 10<br>10<br>9 | 10<br>10<br>9 |
| | Formulation 9 | 2.8 | 0.125<br>0.063<br>0.031 | 10<br>10<br>9 | 10<br>10<br>9 | 10<br>10<br>9 |
| | Formulation 12 | 0.7 | 0.125<br>0.063<br>0.031 | 10<br>10<br>9 | 10<br>10<br>9 | 10<br>10<br>9 |
| | Formulation 13 | 1.1 | 0.125<br>0.063<br>0.031 | 10<br>10<br>9 | 10<br>10<br>9 | 10<br><br>9 |
| | Formulation 14 | 2.1 | 0.125<br>0.063<br>0.031 | 10<br>10<br>9 | 10<br>10<br>9 | 10<br>10<br>9 |
| | Formulation 15 | 2.7 | 0.125<br>0.063<br>0.031 | 10<br>10<br>9 | 10<br>10<br>9 | 10<br>10<br>9 |
| | Formulation 18 | 0.9 | 0.125<br>0.063<br>0.031 | 10<br>10<br>9 | 10<br>10<br>9 | 10<br>10<br>9 |

TABLE 4 (continued)

| | | Average particle size (μm) | Amount of active ingredient (kg./ha.ai) | Barnyard grass | Large crab grass | Green foxtail |
|---|---|---|---|---|---|---|
| Formulations of Present Invention | Formulation 19 | 1.2 | 0.125<br>0.063<br>0.031 | 10<br>10<br>9 | 10<br>10<br>9 | 10<br>10<br>9 |
| | Formulation 20 | 2.6 | 0.125<br>0.063<br>0.031 | 10<br>10<br>9 | 10<br>10<br>9 | 10<br>10<br>9 |
| Comparative Formulations | Formulation 5 | 3.3 | 0.125<br>0.063<br>0.031 | 10<br>8<br>6 | 10<br>7<br>5 | 10<br>8<br>6 |
| | Formulation 6 | 4.4 | 0.125<br>0.063<br>0.031 | 10<br>6<br>3 | 10<br>5<br>3 | 10<br>6<br>4 |
| | Formulation 10 | 3.3 | 0.125<br>0.063<br>0.031 | 10<br>8<br>6 | 10<br>7<br>5 | 10<br>8<br>5 |
| | Formulation 11 | 4.4 | 0.125<br>0.063<br>0.031 | 10<br>6<br>4 | 9<br>5<br>3 | 9<br>5<br>3 |
| | Formulation 16 | 3.4 | 0.125<br>0.063<br>0.031 | 10<br>8<br>6 | 10<br>7<br>5 | 10<br>7<br>5 |
| | Formulation 17 | 4.1 | 0.125<br>0.063<br>0.031 | 9<br>7<br>4 | 10<br>7<br>5 | 9<br>7<br>4 |
| | Formulation 21 | 3.3 | 0.125<br>0.063<br>0.031 | 10<br>8<br>6 | 10<br>7<br>6 | 10<br>8<br>5 |
| | Formulation 22 | 4.4 | 0.125<br>0.063<br>0.031 | 9<br>7<br>5 | 10<br>7<br>5 | 9<br>6<br>4 |
| | Emulsifiable concentrate | — | 0.125<br>0.063<br>0.031 | 10<br>10<br>9 | 10<br>10<br>9 | 10<br>10<br>9 |

Example 4

Herbicidal test by foliage treatment

Sterilized delvium soil was put in a 1/10,000 are-plastic pot. Seeds of large crabgrass were sown, and covered with soil in a thickness of about 1.5 cm. When the weeds had grown to a 3—4 leaf stage, a herbicide were sprayed uniformly to the foliage so that a predetermined amount of Compound No. 2 as the active ingredient was applied.

The herbicide was prepared by diluting the suspension concentrate or the emulsifiable concentrate prepared in the above-mentioned manner with water and adding an extender thereto, and it was sprayed over the entire surface of the foliage of various weeds by means of a small size spray. After two weeks from the application of the herbicide, the weight of weeds surviving on the soil was measured, and a ratio of the weight of the surviving weeds to the weight of the weeds surviving in the non treated area was represented by percentage, whereby the herbicidal effect was determined. The dosages of the active ingredients showing a withering ratio of 80% were compared as between the suspension concentrate and the emulsifiable concentrate.

As shown in Figure 1, the suspension concentrate shows a sharp decrease in its herbicidal effectiveness when the average particle size increases beyond 3.0 µm.

Example 5

Tests for the phytotoxicity against crop plants (foliage treatment)

Sterilized delvium soil was put in a plastic pot having a length of 22 cm, a width of 15 cm and a depth of 6 cm. Seeds of cotton, soybean, French bean, red bean, tomato and alfalfa were sown, and covered with soil in a thickness of about 1.5 cm. When the plants had grown to a 1—2 leaf stage, a herbicide was sprayed uniformly to the foliage so that a predetermined amount of the active ingredient was applied. The herbicide was prepared by diluting the suspension concentrate of the above-mentioned formulation with water, and it was sprayed over the entire surface of the foliage of various crop plants by means of a small size spray.

After one week from the application of the herbicide, the phytotoxicity against each crop plant was evaluated in accordance with the following evaluation standards. The results are shown in Table 5.

Evaluation Standards

| | | |
|---|---|---|
| 10 | Phytotoxicity appears on the entire surface of the leaves | |
| 9 | " | >90% |
| 8 | " | 80—90 |
| 7 | " | 70—80 |
| 6 | " | 60—70 |
| 5 | " | 50—60 |
| 4 | " | 40—50 |
| 3 | " | 30—40 |
| 2 | " | 20—30 |
| 1 | " | 10—20 |
| 0 | " | 0—10 |

TABLE 5

| | Average particle size (μm) | Amount of active ingredient (kg/ha.ai) | Soy-bean | French bean | Red bean | Tomato | Alfalfa | Cotton |
|---|---|---|---|---|---|---|---|---|
| Formulation 1 | 0.7 | 1.0<br>0.5<br>0.25 | 1<br>0<br>0 | 1<br>0<br>0 | 0<br>0<br>0 | 0<br>0<br>0 | 0<br>0<br>0 | 0<br>0<br>0 |
| Formulation 4 | 2.8 | 1.0<br>0.5<br>0.25 | 0<br>0<br>0 | 0<br>0<br>0 | 0<br>0<br>0 | 0<br>0<br>0 | 0<br>0<br>0 | 0<br>0<br>0 |
| Formulation 7 | 1.1 | 1.0<br>0.5<br>0.25 | 0<br>0<br>0 | 0<br>0<br>0 | 0<br>0<br>0 | 0<br>0<br>0 | 0<br>0<br>0 | 0<br>0<br>0 |
| Formulation 9 | 2.8 | 1.0<br>0.5<br>0.25 | 0<br>0<br>0 | 0<br>0<br>0 | 0<br>0<br>0 | 0<br>0<br>0 | 0<br>0<br>0 | 0<br>0<br>0 |
| Formulation 12 | 0.7 | 1.0<br>0.5<br>0.25 | 1<br>0<br>0 | 1<br>0<br>0 | 0<br>0<br>0 | 0<br>0<br>0 | 0<br>0<br>0 | 0<br>0<br>0 |
| Formulation 15 | 2.7 | 1.0<br>0.5<br>0.25 | 0<br>0<br>0 | 0<br>0<br>0 | 0<br>0<br>0 | 0<br>0<br>0 | 0<br>0<br>0 | 0<br>0<br>0 |
| Formulation 19 | 1.2 | 1.0<br>0.5<br>0.25 | 0<br>0<br>0 | 0<br>0<br>0 | 0<br>0<br>0 | 0<br>0<br>0 | 0<br>0<br>0 | 0<br>0<br>0 |
| Emulsifiable concentrate of Compound No. 1 | — | 1.0<br>0.5<br>0.25 | 5<br>4<br>3 | 5<br>4<br>3 | 4<br>3<br>2 | 4<br>3<br>2 | 5<br>4<br>2 | 3<br>2<br>1 |
| Emulsifiable concentrate of Compound No. 2 | — | 1.0<br>0.5<br>0.25 | 6<br>4<br>3 | 5<br>3<br>3 | 4<br>3<br>2 | 4<br>3<br>2 | 5<br>3<br>2 | 2<br>1<br>0 |

Example 6

Test for the phytotoxicity against crop plants (foliage treatment)

Sterilized delvium soil was put in a 1/10,000 are-plastic pot. Soybean seeds were sown and covered with soil in a thickness of about 1.5 cm. When the soybeans had grown to the 2nd trifoliate leaf stage, the suspension concentrate of Formulation 7, diluted with water to bring the concentration of the active ingredient to a predetermined level and adding an extender to it, was sprayed uniformly over the entire surface of the foliage of the soybeans by means of a small size spray.

After two weeks from the application of the herbicide, the phytotoxicity against the soybeans was evaluated in accordance with the evaluation standards shown in Example 5. The results are shown in Figure 2. It is evident from the Figure 2 that the phytotoxicity is substantially reduced with the suspension concentrate of the present invention as compared with the phytotoxicity of the emulsifiable concentrate.

**Claims**

1. A suspension concentrate for weed control, which comprises at least one of the compounds represented by the general formula I:

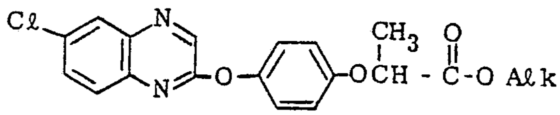

(I)

where Alk is a lower alkyl group, as the active ingredient, wherein the active ingredient is in the form of fine solid particles having an average particle size within a range of from 0.5 to 3 µm.

2. The suspension concentrate according to Claim 1, wherein at least 90% by weight of the fine solid particles of the active ingredient have a particle size of not more than 5 µm.

3. The suspension concentrate according to Claim 1, wherein the active ingredient is a compound of the general formula I wherein Alk is methyl, ethyl, n-propyl, i-propyl, n-butyl, i-butyl or n-pentyl.

4. A method for weed control, wherein a suspension concentrate comprising at least one of the compounds represented by the general formula I:

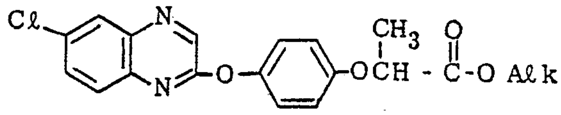

(I)

where Alk is a lower alkyl group, as the active ingredient, is used for foliage treatment to control grass weeds in broad leaf crop plants as a formulation having a reduced phytotoxicity against the broad leaf crop plants, wherein the active ingredient is in the form of fine solid particles having an average particle size within a range of from 0.5 to 3 µm.

5. The process according to Claim 4, wherein at least 90% by weight of the fine solid particles of the active ingredient have a particle size of not more than 5 µm.

**Patentansprüche**

1. Suspensionskonzentrat zur Unkrautbekämpfung, umfassend mindestens eine der Verbindungen der allgemeinen Formel I:

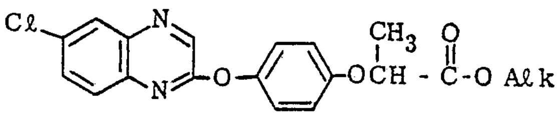

(I)

wobei Alk für eine niedere Alkylgruppe steht, als Wirkstoff, wobei der Wirkstoff in Form feiner Feststoffteilchen mit einer durchschnittlichen Teilchengröße im Bereich von 0,5 bis 3 µm vorliegt.

2. Suspensionskonzentrat gemäß Anspruch 1, wobei mindestens 90 Gew.-% der feinen Feststoffteilchen des Wirkstoffs eine Teilchengröße von nicht mehr als 5 µm aufweisen.

3. Suspensionskonzentrat gemäß Anspruch 1, wobei der Wirkstoff eine Verbindung der allgemeinen Formel I ist, bei der Alk für Methyl, Ethyl, n-Propyl, i-Propyl, n-Butyl, i-Butyl oder n-Pentyl steht.

4. Verfahren zur Unkrautbekämpfung, wobei ein Suspensionskonzentrat, welches mindestens eine der Verbindungen der allgemeinen Formel I:

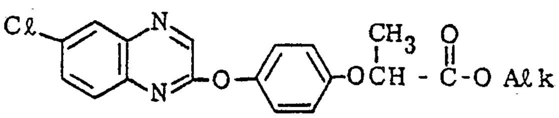

(I)

wobei Alk für eine niedere Alkylgruppe steht, als den Wirkstoff umfaßt, als eine Formulierung mit verringerter Phytotoxizität gegenüber Breitblattnutzpflanzen für die Blattbehandlung verwendet wird, um Grasunkräuter in Breitblattnutzpflanzen zu bekämpfen, wobei der Wirkstoff in Form feiner Feststoffteilchen mit einer durchschnittlichen Teilchengröße im Bereich von 0,5 bis 3 µm vorliegt.

5. Verfahren gemäß Anspruch 4, wobei mindestens 90 Gew.-% der feinen Feststoffteilchen des Wirkstoffs eine Teilchengröße von nicht mehr als 5 µm aufweisen.

**Revendications**

1. Concentré en suspension pour la lutte contre les mauvaises herbes, qui comprend au moins l'un des composés représentés par la formule générale I:

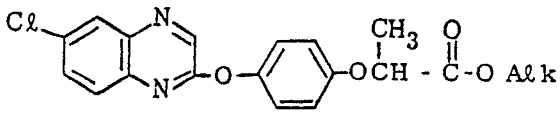

(I)

dans laquelle Alk représente un groupe alkyle inférieur, en tant qu'ingrédient actif, l'ingrédient actif étant sous la forme de fines particules solides présentant une taille moyenne de particule se situant dans une plage allant de 0,5 à 3 μm.

2. Concentré en suspension selon la revendication 1, dans lequel au moins 90% en poids de fines particules solides de l'ingrédient actif présentent une taille de particule ne dépassant pas 5 μm.

3. Concentré en suspension selon la revendication 1, dans lequel l'ingrédient actif est un composé de formule générale I dans lequel Alk représente le groupe méthyle, éthyle, n-propyle, i-propyle, n-butyle, i-butyle ou n-pentyle.

4. Procédé pour la lutte contre les mauvaises herbes, dans lequel un concentré en suspension comprenant au moins l'un des composés représentés par la formule générale I:

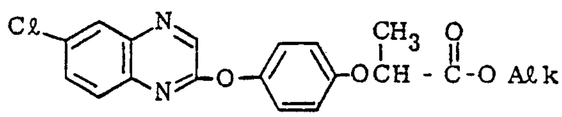

(I)

dans laquelle Alk représente un groupe alkyle inférieur, en tant qu'ingrédient actif, est utilisé pour le traitement du feuillage pour lutter contre les mauvaises herbes se trouvant parmi les plantes cultivées à larges feuilles, en tant que formulation présentant une phytotoxicité réduite vis-à-vis des plantes cultivées à larges feuilles, dans laquelle l'ingrédient actif est sous la forme de fines particules solides présentant une taille moyenne de particule se situant dans une plage allant de 0,5 à 3 μm.

5. Procédé selon la revendication 4, dans lequel au moins 90% en poids des fines particules solides de l'ingrédient actif présentent une taille de particule ne dépassant pas 5 μm.

# FIGURE 1

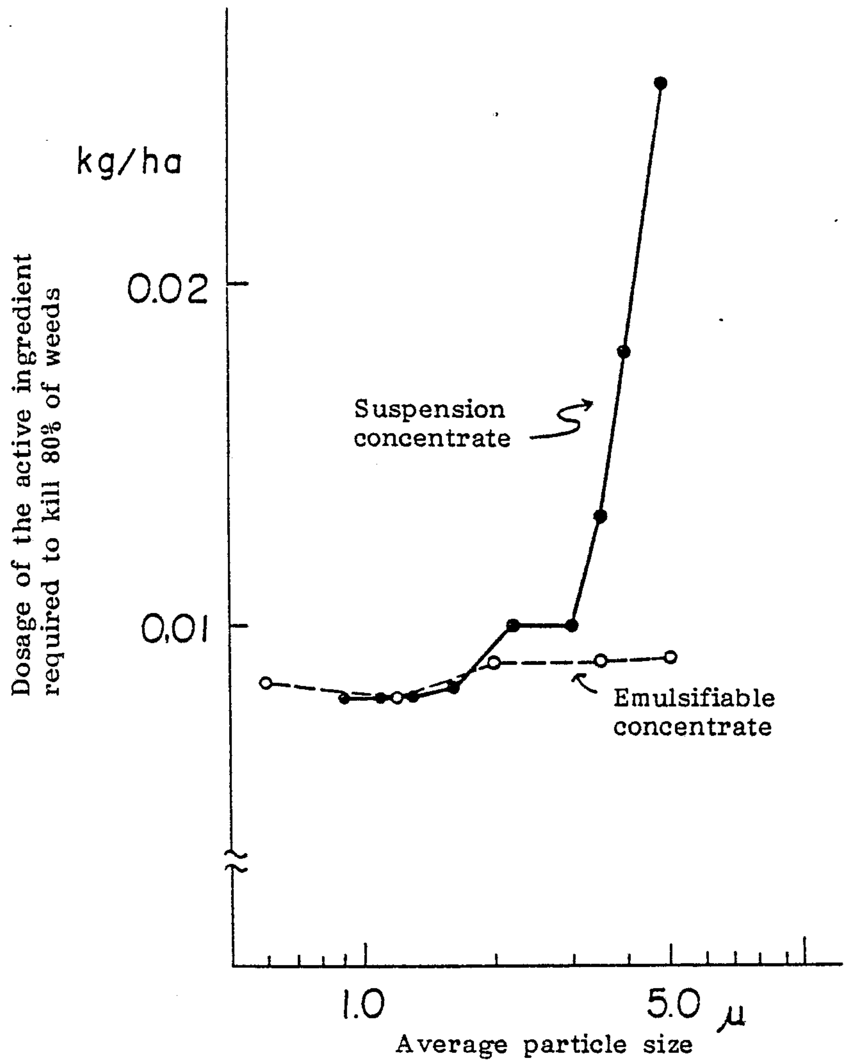
kg/ha
Dosage of the active ingredient required to kill 80% of weeds
0.02
0.01
Suspension concentrate
Emulsifiable concentrate
1.0
5.0 μ
Average particle size

FIGURE 2

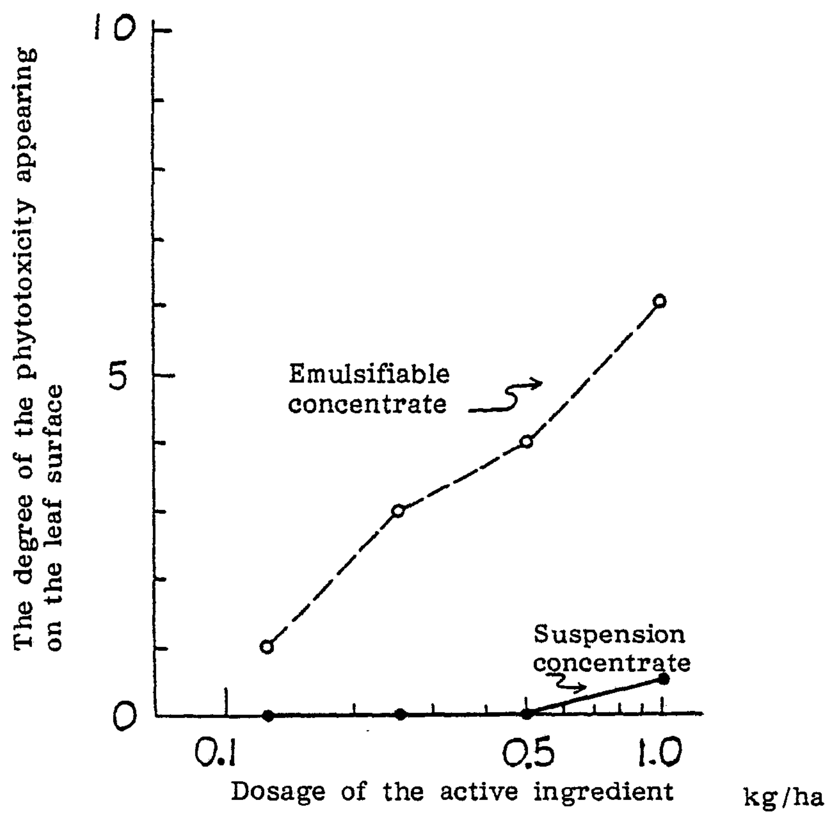

The degree of the phytotoxicity appearing on the leaf surface
10
5
0
Emulsifiable concentrate
Suspension concentrate
0.1
0.5
1.0
Dosage of the active ingredient
kg/ha